## Europäisches Patentamt
## European Patent Office
## Office européen des brevets

(19)

(11) Veröffentlichungsnummer: **0 038 435 B1**

(12) # EUROPÄISCHE PATENTSCHRIFT

(45) Veröffentlichungstag der Patentschrift:
**22.02.84**

(21) Anmeldenummer: **81102346.4**

(22) Anmeldetag: **27.03.81**

(51) Int. Cl.³: **H 04 L 25/03**, H 04 L 25/40, H 04 L 7/02

(54) **Signalregenerator für Digitalsignale.**

(30) Priorität: **21.04.80 DE 3015309**

(43) Veröffentlichungstag der Anmeldung:
**28.10.81 Patentblatt 81/43**

(45) Bekanntmachung des Hinweises auf die Patenterteilung:
**22.02.84 Patentblatt 84/8**

(84) Benannte Vertragsstaaten:
**AT BE CH FR GB IT LI NL SE**

(56) Entgegenhaltungen:
**DE - A - 2 525 740**
**US - A - 3 737 585**
**US - A - 4 078 157**

**KARLHEINZ TRÖNDLE, DR. ING. REINOLD WEISS "Einführung in die Puls-Code-Modulation", 1974, R. OLDENBOURG VERLAG, München - Wien, Seiten 144-148**

(73) Patentinhaber: **SIEMENS AKTIENGESELLSCHAFT, Berlin und München Wittelsbacherplatz 2, D-8000 München 2 (DE)**

(72) Erfinder: **Rehm, Hans, Dipl.-Ing., Wildenfelserstrasse 19, D-8000 München 60 (DE)**

## Signalgenerator für Digitalsignale

Auf den Übertragungsstrecken von Digital-Übertragungssystemen sind bekanntlich in mehr oder weniger großen Abständen Signalregeneratoren vorzusehen, in denen die übertragenen Digitalsignale entzerrt, amplituden- und taktregeneriert werden. In einem solchen Signalregenerator können dazu, in Kette geschaltet, u. a. ein Entzerrerverstärker, ein beispielsweise mit Hilfe eines Schmitt-Triggers realisierter Amplitudenregenerator und ein beispielsweise mit Hilfe eines von einem Taktextraktor taktgesteuerten Master-Slave-D-Flip-Flops realisierter Zeitregenerator vorgesehen sein; der eingangsseitig an den Entzerrerverstärker angeschlossene und ausgangsseitig zum Zeitregenerator führende Taktextraktor kann dabei, in Kette geschaltet, u. a. eine Gleichrichterschaltung zur Ableitung eines Signals mit einem einen herausragenden Energieanteil bei der Taktfrequenz aufweisenden Frequenzspektrum, gegebenenfalls einen Schmalbandverstärker, und eine Phasenregelschleife mit spannungsgesteuertem Oszillator aufweisen (telcom report 2 [1979], Beiheft »Digital-Übertragungstechnik«, S. 105 ... 109, 106; DE-AS 2 623 444; DE-OS 2 833 592). Der Entzerrerverstärker kann dabei eine Kettenschaltung aus — jeweils über Breitband-Linearverstärkerstufen miteinander verbunden — passiven Entzerrernetzwerken (Festentzerrer), einem Allpaß zur Realisierung des geforderten Frequenzganges und einem variablen Entzerrer zur Korrektur von Pegel- und Entzerrungsfehlern infolge abweichender Feldlänge, Leitungstoleranzen und Temperaturschwankungen aufweisen; der variable Widerstand des variablen Entzerrers kann durch eine PIN-Diode gebildet sein, deren Gleichstrom mit Hilfe eines Regelverstärkers so eingestellt wird, daß der Signalpegel am Eingang des Amplitudenregenerators schwankungsfrei ist (telcom report, a.a.O., S. 107).

Hierzu ist aus der Amplitude des entzerrten Signals eine Regelspannung abzuleiten, die bei Abweichung der Amplitude vom Sollwert über den Regelverstärker den variablen Entzerrer nachregelt; dies in einem Signalregenerator der vorstehend skizzierten Art in vorteilhafter Weise zu realisieren, zeigt die Erfindung einen Weg.

Die Erfindung betrifft einen Signalregenerator für Digitalsignale mit einem einen von einem Regelverstärker gesteuerten variablen Entzerrer enthaltenden Entzerrerverstärker und einem Zeitregenerator sowie einem eingangsseitig mit einem Ausgang des Entzerrerverstärkers und ausgangsseitig mit einem Eingang des Zeitregenerators verbundenen, eine Gleichrichterschaltung enthaltenden Taktextraktor; in einem solchen Signalregenerator ist erfindungsgemäß ein zum Steuereingang des Regelverstärkers führender Spitzenwertgleichrichter eingangsseitig an die eine Hauptelektrode (Kollektor) eines mit seiner anderen Hauptelektrode (Emitter) im Ausgangszweig der im Taktextraktor enthaltenen Gleichrichterschaltung liegenden Gleichrichtertransistors angeschlossen, dessen Steuerelektrode (Basis) mit dem Ausgang des Entzerrerverstärkers verbunden ist.

Die Erfindung gestattet es, den ohnehin in der Gleichrichterschaltung des Taktextraktors vorgesehenen Transistor zugleich auch als den Entzerrerverstärker mit dem zur Regelspannungserzeugung vorgesehenen Spitzenwertgleichrichter verbindenden, gleichrichtenden Koppelverstärker mitauszunutzen, und erweist sich somit als entsprechend wenig schaltungsaufwendig. Anhand der Zeichnung sei die Erfindung noch näher erläutert. Dabei zeigt

Fig. 1 ein Schaltungsschema eines Signalgenerators;

Fig. 2 zeigt schaltungstechnische Einzelheiten eines Signalregenerators gemäß der Erfindung.

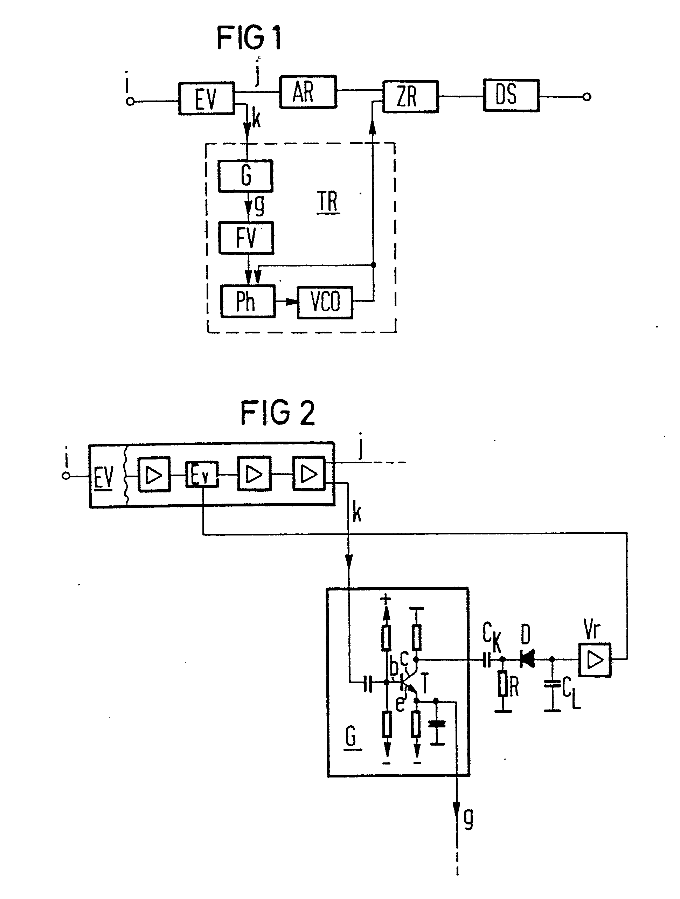

In der Zeichnung Fig. 1 ist schematisch ein Signalregenerator dargestellt, der als Streckenregenerator beispielsweise eines 565-Mbit/s-Digital-Übertragungssystems der Amplituden- und Zeitregenerierung der übertragenen Digitalsignale dienen mag. Die zu regenerierenden Digitalsignale werden am Eingang i des Signalregenerators zunächst einem Entzerrerverstärker EV zugeführt, der den Frequenzgang der vorangehenden Übertragungsstrecke kompensiert und Schwankungen des Amplitudenpegels des empfangenen Digitalsignals ausgleicht. Der Entzerrerverstärker EV kann dazu, wie eingangs ausgeführt, in bekannter Weise eine Kettenschaltung aus — jeweils über Breitband-Linearverstärkerstufen miteinander verbunden — passiven Entzerrernetzwerken (Festentzerrer) zum Erzielen der gewünschten Übertragungsfunktion, einem Allpaß zur Realisierung des geforderten Frequenzganges und einem variablen Entzerrer zur Berücksichtigung abweichender Feldlängen, Leitungstoleranzen und Temperaturschwankungen aufweisen, wobei der variable Widerstand des variablen Entzerrers durch eine PIN-Diode gebildet sein kann, deren Gleichstrom mit Hilfe eines Regelverstärkers so eingestellt wird, daß an den Ausgängen j und k des Entzerrerverstärkers EV jeweils ein gleichbleibender Signalpegel gegeben ist. Hierzu wird aus der Amplitude des entzerrten Digitalsignals eine entsprechende Regelspannung abgeleitet, wie dies unten anhand der Zeichnung Fig. 2 näher erläutert wird.

Mit dem Ausgang jedes Entzerrerverstärkers EV ist der Eingang eines beispielsweise mit Hilfe eines Schmitt-Triggers realisierten Amplitudenregenerators AR verbunden, dem das beispielsweise mit Hilfe eines von einem Taktregenerator TR gesteuerten Master-Slave-D-Flip-Flops realisierter Zeitregenerator ZR nachgeschaltet ist. Dem Zeitregenerator ZR seinerseits kann noch eine Codier-Sendestufe DS nachgeschaltet sein, in der die regenerierten Digitalsignale gegebenenfalls in Signalimpulse mit für die weitere Übertragung gewünschter Impulsform bzw. mit gewünschtem Frequenzspektrum umgeformt werden; beispielsweise kann die Codiersendestufe DS ihr vom Zeitregenerator ZR her zugeführte Binärsignale in AMI-(alternatemark-inversion-)Signalimpulse umsetzen. Die Codiersendestufe DS kann dazu einen Codewandler aufweisen, der ihm eingangsseitig zugeführte Binärsignale in AMI-Signale umsetzt, die dann in einem nachfolgenden Sendefilter eine Impulsformung erfahren; die Codiersendestufe DS kann aber auch einen Momentanwert der auszusendenden Signalimpulse codiert speichernden und nach Maßgabe der vom Zeitregenerator ZR abgegebenen Digitalsignale angesteuerten Festwertspeicher aufweisen, der die entsprechenden Momentanwerte in ihrer codierten Darstellung einem Decoder zuführt, welcher daraus die entsprechenden weiterzu-übertragenden Signalimpulse bildet.

An einen weiteren Ausgang k des Entzerrerverstärkers EV ist mit seinem Eingang der bereits erwähnte Taktregenerator TR angeschlossen. Dieser Taktregenerator TR enthält zunächst eine Gleichrichterschaltung G, mit deren Hilfe aus dem empfangenen Digitalsignal ein Signal abgeleitet wird, dessen Frequenzspektrum bei der Taktfrequenz einen herausragenden Energieanteil aufweist. Werden Digitalsignale, deren Frequenzspektrum bei der Taktfrequenz keine markante bzw. herausragende Linie, sondern eine Nullstelle aufweist, in Form von pseudoternären AMI-Signalen empfangen, so kann die Gleichrichterschaltung G, mit deren Hilfe ein Signal mit herausragender Bittaktlinie im Frequenzspektrum erhalten wird, durch eine Doppelweggleichrichterschaltung gebildet sein oder aber auch durch eine Einweggleichrichterschaltung, wie dies auch aus Fig. 2 ersichtlich wird. Bei anders codierten Digitalsignalen ist ein entsprechend angepaßter Gleichrichter zu verwenden, z. B. bei reinen Binärsignalen eine Gleichrichterschaltung mit vorgeschaltetem Differenzierglied. Das am Gleichrichterausgang g auftretende Signal kann in einem nachfolgenden Schmalbandverstärker FV vorgefiltert werden, um dann zur eigentlichen Taktregenerierung einer PLL-(Phase-Locked-Loop-)Schaltung mit einem Phasenvergleicher Ph, einem in der Zeichnung Fig. 1 nicht eigens dargestellten Loopfilter und einem spannungsgesteuerten Oszillator VCO, von dessen Ausgang her der Zeitregenerator ZR taktgesteuert wird, zugeführt zu werden.

In der Zeichnung Fig. 2 sind nun schaltungstechnische Einzelheiten eines gemäß der Erfindung aufgebauten Signalregenerators der aus Fig. 1 ersichtlichen Struktur dargestellt. Dabei ist zunächst nochmals verdeutlicht, daß der den Eingang i und die beiden Ausgänge j und k aufweisende Entzerrerverstärker u. a. einen variablen Entzerrer Ev umfaßt, der von einem Regelverstärker Vr her in der zuvor erläuterten Weise gesteuert wird. Die an den Ausgang k des Entzerrerverstärkers EV angeschlossene Gleichrichterschaltung G weist einen Gleichrichtertransistor T auf, dessen Emitterelektrode e im Ausgangszweig g der Gleichrichterschaltung G liegt. Die Gleichrichterschaltung G ist hier als Einweggleichrichterschaltung dargestellt, in der der Transistor T entsprechend in Sperrichtung vorgespannt ist, so daß er nur die positiven Halbwellen des entzerrten Digitalsignals durchläßt. Es sei jedoch bemerkt, daß die Gleichrichterschaltung G gegebenenfalls auch durch eine Zweiweggleichrichterschaltung gebildet sein kann, wie sie etwa aus Fig. 3 der eingangs genannten DE-OS 2 833 592 bekannt ist.

An die nicht im Ausgangszweig g der Gleichrichterschaltung G liegende Hauptelektrode (Kollektor) c des Gleichrichtertransistors T — bzw. im Falle einer Zweiweggleichrichterschaltung, eines ihrer Gleichrichtertransistoren — ist nun über einen Koppelkondensator $C_K$ ein mit einem Widerstand R, einer Gleichrichterdiode D und einem Ladekondensator $C_L$ gebildeter Spitzenwertgleichrichter angeschlossen, d. h. eine Gleichrichterschaltung mit so großer Zeitkonstante, daß die Ladespannung nur langsam absinkt bzw. bei öfter wiederholten Signalspitzen praktisch gleich bleibt. Mit Hilfe dieses mit dem Steuereingang des Regelverstärkers Vr verbundenen Spitzenwertgleichrichters wird die Regelspannung für den variablen Entzerrer Ev erzeugt. Hierbei wird der ohnehin in der Gleichrichterschaltung G des Taktregenerators TR (vgl. Fig. 1) vorgesehene, aufgrund seiner Vorspannung als Gleichrichter für das entzerrte Digitalsignal wirkende Transistor T gleichzeitig als gleichrichtender Verstärker für die Regelspannungserzeugung mitausgenutzt. Die Speisung des eigentlichen Spitzenwertgleichrichters mit Halbwellen nur einer Polarität vermeidet dabei eine (sonst durch Halbwellen der Gegenpolarität verursachte) Beanspruchung der Gleichrichterdiode D durch höhere Sperrspannungen und zugleich damit eine stärkere Entladung über den Sperrwiderstand bzw. über die Sperrkapazität der Gleichrichterdiode. Durch den Transistor T können die dem Spitzenwertgleichrichter zuzuführenden Signalimpulse eine begrenzte, etwa dreifache Verstärkung erfahren.

Damit die erzeugte Regelspannung möglichst unabhängig vom Bitmuster ist, muß, wie schon gesagt, die Entladezeitkonstante des Spitzenwertgleichrichters möglichst groß sein; umgekehrt muß die Aufladezeitkonstante möglichst klein sein. Zu große Entlade- bzw. zu kleine Aufladezeitkonstanten können andererseits unzweckmäßig sein, da dann — wenn auch nur sehr selten auftretende — hohe Rauschimpulse Regelungsfehler verursachen können. Letzterem wird in der Schaltungsanordnung nach Fig. 2 indessen bereits durch eine begrenzende Impulsverstärkung im Gleichrichtertransistor T entgegengewirkt.

Die Gleichrichterdiode D muß der Signalbitrate entsprechend schnell sein; bei einer Bitrate von beispielsweise 565 Mbit/s kann die Gleichrichterdiode z. B. durch eine Schottky-Diode gebildet sein; bei Verwendung einer entsprechend schnellen Diode kann der bitmusterbedingte Regelfehler entsprechend verkleinert werden. In gleicher Richtung wirkt auch eine den Transistor T stärker sperrende Vorspannung, wobei allerdings die erzeugte Regelspannung niedriger wird.

## Patentanspruch

Signalregenerator für Digitalsignale mit einem einen von einem Regelverstärker (Vr) gesteuerten variablen Entzerrer (Ev) enthaltenden Entzerrerverstärker (EV) und einem Zeitregenerator (ZR) sowie einem eingangsseitig mit einem Ausgang des Entzerrerverstärkers (EV) und ausgangsseitig mit einem Eingang des Zeitregenerators (ZR) verbundenen, eine Gleichrichterschaltung (G) enthaltenden Taktextraktor (TR), dadurch gekennzeichnet, daß ein zum Steuereingang des Regelverstärkers (Vr) führender Spitzenwertgleichrichter (R, D, C$_L$) eingangsseitig an die eine Hauptelektrode (c) eines mit seiner anderen Hauptelektrode (e) im Ausgangszweig (g) der im Taktextraktor (TR) enthaltenen Gleichrichterschaltung (G) liegenden Gleichrichtertransistors (T) angeschlossen ist, dessen Steuerelektrode (b) mit dem Ausgang (k) des Entzerrerverstärkers (EV) verbunden ist.

## Claims

A signal regenerator for digital signals having an equaliser amplifier (EV) which includes a variable equaliser (Ev) controlled by a regulating amplifier (Vr), and having a time regenerator (ZR) and a clock pulse extractor (TR) which includes a rectifier circuit (G) and which at the input end is connected to an output of the equaliser amplifier (EV) and at the output end to an input of the time regenerator (ZR), characterised in that at the input end, a peak value rectifier (R, D, C$_L$) leading to the control input of the regulating amplifier (Vr) is connected to the one main electrode (c) of a rectifier transistor (T) which has its other main electrode (e) arranged in the output branch (g) of the rectifier circuit (G) included in the clock pulse extractor (TR), and the control electrode (b) of which rectifier transistor (T) is connected to the output (k) of the equaliser amplifier (EV).

## Revendication

Régénérateur de signaux pour des signaux numériques comportant un amplificateur (EV), contenant un correcteur variable (Ev) commandé par un amplificateur de réglage (Vr), et un régénérateur de temps (ZR), ainsi qu'un extracteur de cadence (TR) contenant un circuit redresseur (G) et relié à une sortie de l'amplificateur correcteur (EV) côté entrée et à une entrée du régénérateur de temps (ZR) côté sortie, caractérisé par le fait qu'un redresseur de valeur de crête (R, D, C$_L$), conduisant à l'entrée de commande de l'amplificateur de réglage (Vr), est relié côté entrée à une des électrodes principales (c) d'un transistor redresseur (G) dont l'autre électrode principale (e) so trouve dans la branche de sortie (g) du circuit redresseur (G) contenu dans l'extracteur de cadence (TR), et dont l'électrode de commande (b) est reliée à la sortie (k) de l'amplificateur correcteur (EV).

# FIG 1

# FIG 2